# EUROPEAN PATENT SPECIFICATION

(11) **EP 1 879 487 B1**
(45) Date of publication and mention of the grant of the patent: **20.08.2008**
(21) Application number: 06744701.1
(22) Date of filing: 15.05.2006
(51) Int. Cl.: A47J 47/01, A47J 47/06

(54) **AIRTIGHT COFFEE DISPENSER FOR COFFEE MACHINE**
LUFTDICHTE KAFFEEABGABEVORRICHTUNG FÜR KAFFEEMASCHINE
DISTRIBUTEUR DE CAFE ETANCHE A L'AIR POUR MACHINE A CAFE

(30) Priority: 13.05.2005 IT MI20050876
(43) Date of publication of application: 23.01.2008
(73) Proprietor: Petervin S.A., L-1233 Luxembourg (LU)
(72) Inventor: ILLY, Francesco, CH-6043 Meggen (CH)
(74) Representative: Concone, Emanuele
(86) International application number: PCT/IB2006/001262
(87) International publication number: WO 2006/120560

(56) References cited:
- DE-A1- 3 242 497
- DE-A1- 19 625 699
- DE-U1- 7 735 828
- DE-U1- 20 115 968
- US-A1- 2003 209 571
- PATENT ABSTRACTS OF JAPAN vol. 1997, no. 05, 30 May 1997 (1997-05-30) & JP 09 012099 A (MATSUSHITA ELECTRIC IND CO LTD), 14 January 1997 (1997-01-14)

## Description

The present invention relates to coffee machines both for domestic and professional use, and in particular to an airtight coffee dispenser applicable to any known coffee machine.

It is known that coffee is sold in airtight packages to protect it from contact with air that would cause a quick deterioration. The deterioration of the qualities of the coffee in contact with air is due mainly to two factors:
a) the very fast absorption of the moisture contained in the surrounding air that implies the opening of the pores of the coffee cells and the subsequent escape of the gases contained therein, among which the flavours. This phenomenon causes a flattening of the olfactory spectrum of the drink for lack of these gases lost to the atmosphere, and in the case of ground coffee this occurs at a much faster rate with respect to coffee in beans exactly due to the greater number of intercellular walls directly exposed to the surrounding atmosphere;
b) the oxidation process of the fats contained in the coffee cell, due to the fact that since coffee contains powerful anti-oxidants it binds the oxygen present in the surrounding atmosphere at a very fast rate, this oxygen being nothing else than the oxygen contained in the air that replaced the gases contained in the cell due the phenomenon of stabilization of the osmotic pressure between the two atmospheres, outside and inside the cell. However, the continuous absorption of the present oxygen changes the composition of the air contained in the cell and triggers a mechanism of constant re-building of the osmotic pressure which in turn will tend to stabilization by drawing in new air rich in oxygen that in turn will be absorbed, generating a cycle that will stop only when the coffee will stop absorbing oxygen, namely only upon complete oxidation of all the anti-oxidants, oils included, that results in the complete rancidity thereof.

These two phenomena that cause the organoleptic deterioration of roasted coffee are the main reason why the manufacturers of automatic coffee machines chose to operate mainly with coffee in beans, so as to slow down the deterioration in the hope of keeping it below the taste threshold of their customers. In fact, once the coffee has been removed from its airtight package to be loaded in the dispenser of a coffee machine it is exposed to the aggression by the air, and the above-mentioned phenomena remain one of the great drawbacks of the automatic machines because they too often involve a poor quality of the drink.

Another drawback caused by the moisture absorbed by the coffee is the change in the coffee consistence, that makes difficult grinding the coffee in beans and dispensing the ground coffee. In fact, if the coffee machine includes a grinder set to grind the coffee in the dry state that the coffee has when just loaded in the machine, said setting is inadequate when the coffee is ground in a state of greater moisture after having been stored for some time in the dispenser.

Also the factory-ground coffee is affected by moisture, since it tends to form a compact and/or lumpy mass that makes difficult to dispense the precise amount of coffee required for each extraction cycle. Documents US-2003/0209571 and DE-19625699 disclose coffee dispensers.

For these and other reasons, the market is turning more and more towards monodose portion systems, which however imply a much higher cost of the coffee package both from the economical and environmental point of view. As a matter of fact, it is clear that the economic cost of packaging coffee in monodose portions is immensely greater than that of ground coffee or coffee in beans, and also the environmental impact of such a system is at least six times higher than the conventional one.

Therefore the object of the present invention is to provide a coffee dispenser which overcomes the above-mentioned drawbacks.

This object is achieved by means of a coffee dispenser according to claim 1. For a greater effectiveness, the dispenser can also include a vacuum circuit and/or a circuit for supplying inert gas.

The main advantage of the present coffee dispenser is exactly that of allowing an optimal storage of the coffee in the coffee machine, even for a long time and regardless of the frequency of usage of the machine.

A second significant advantage of said dispenser is that it can be made in different embodiments more or less sophisticated according to the cost and coffee storage time requirements.

A further advantage of this coffee dispenser comes from the fact that it has a simple, cheap and reliable structure that allows it to be easily applied to any kind of coffee machine.

These and other advantages and characteristics of the coffee dispenser according to the present invention will be clear to those skilled in the art from the following detailed description of some embodiments thereof, with reference to the annexed drawings wherein:
Fig.1 is a diagrammatic view showing a first embodiment of the coffee dispenser, complete with a vacuum circuit;
Fig.2 is a diagrammatic partially sectional view showing a variable volume storage container of a second embodiment of the coffee dispenser;
Fig.3 is a diagrammatic view showing a detail of the piston of a third embodiment of the coffee dispenser;
Fig.4 is a diagrammatic partially sectional view showing a variable volume storage container of a fourth embodiment of the coffee dispenser; and
Fig.5 is a diagrammatic partially sectional view showing a variable volume storage container of a fifth embodiment of the coffee dispenser.

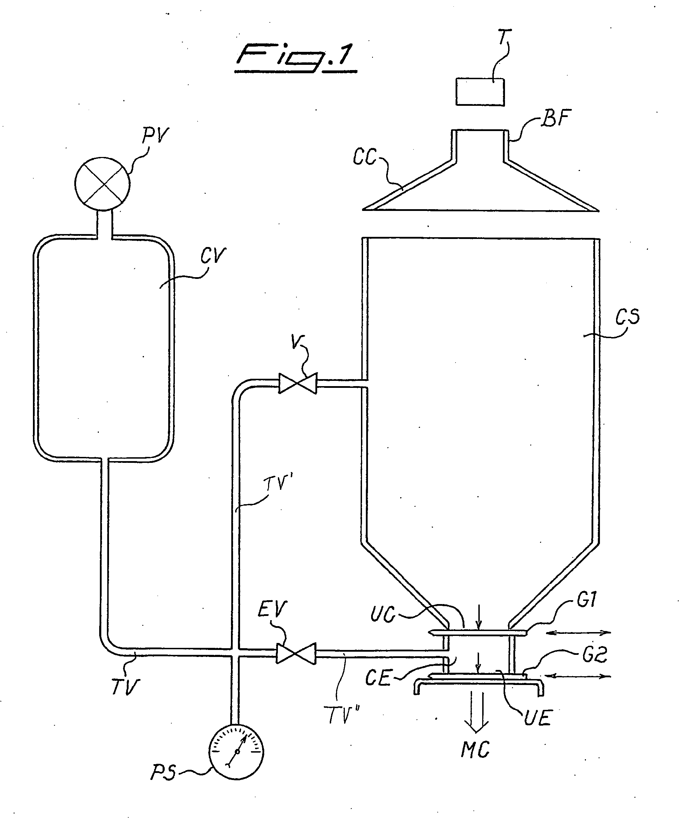

With reference to fig.1, there is seen that a coffee dispenser according to the present invention, suitable for both coffee in beans and ground coffee, includes an airtight storage container CS closed at the top by a lid CC, which is in turn provided with a screw cap T that is screwed onto a threaded mouth BF, and at the bottom by a sliding shutter G1 that seals an outlet nozzle UC of container CS provided with a suitable gasket (not illustrated).

Under the storage container CS there is arranged a much smaller dispensing chamber CE, in which coffee falls when shutter G1 is opened. Said chamber CE is in turn airtight since it is closed at the top by said shutter G1 and at the bottom by a similar shutter G2 that closes a dispensing nozzle UE, both shutters obviously abutting on suitable gaskets (not illustrated).

From the description above, the operation of the present coffee dispenser is readily understood. The coffee loaded in the storage container CS through mouth BF is dropped by gravity into the dispensing chamber CE by opening shutter G1 while shutter G2 is closed, the size of chamber CE being obviously designed to receive a single dose of coffee. After that, shutter G1 is closed and the opening of shutter G2 causes the coffee contained in chamber CE to fall toward the part of the coffee machine that will provide to use the coffee (extraction chamber or grinder), as indicated by arrow MC.

It should be noted that also lid CC could be removed to load the coffee, but it is actually provided only for an easy access to container CS for the cleaning operations, since mouth BF closed by cap T is sufficient to introduce both coffee in beans and ground coffee.

The presence of two distinct airtight chambers, namely the large-size container CS for the whole load of coffee, and the small-size chamber CE for dispensing coffee to the machine allows to limit to a minimum amount the air that is introduced into the dispenser at each coffee output. In fact, upon opening of shutter G2, the coffee falls down from chamber CE and air replaces the dispensed coffee while container CS remains hermetically sealed. After that, shutter G2 is closed and shutter G1 between container CS and chamber CE is opened to restore the dose of coffee in the latter and then shutter G1 is closed. In this way, the amount of air that reaches container CS is only the air contained in the small dispensing chamber CE, thus assuring a good storage of the coffee.

Furthermore, thanks to the hermetic sealing, in the long periods when coffee waits to be requested by the machine the air containing oxygen and moisture can not penetrate container CS and chamber CE, where it is drawn by the strong osmotic pressure due to the difference between the almost complete absence of moisture inside the dispenser (coffee roasted at 220°C is practically void of water molecules) and the surrounding air whose moisture content can range from 20% to 100%.

Moreover, the presence of the dispensing chamber CE allows to achieve a precise dosage of the coffee required for each extraction cycle, and it is also possible to provide the possibility of varying the volume of chamber CE in order to change said dosage.

A first possibility for adjusting the volume is making chamber CE as an assembly of two flanges, in which the seats for shutters G1 and G2 are formed, screwed onto a central ring nut with double opposite threading. In this way, by rotating the ring nut in one direction or the other it is possible to move the flanges closer or away, thus changing the height of chamber CE and therefore its volume.

A second possibility is that of providing inserts to be introduced in chamber CE in order to reduce its volume, whereby the maximum volume is that of the chamber without any insert. These inserts are preferably shaped with an external cylindrical surface (having a diameter equal to the internal diameter of chamber CE) and an internal frustoconical surface, and it is possible to provide a series of inserts of different internal diameter so as to reduce the volume of chamber CE by the desired amount (even with a "resolution" of 0,1 g of coffee).

For a further enhancement in the coffee storage performance, the embodiment illustrated in fig.1 also provides the use of a vacuum circuit although even in the simplest embodiment, with container CS and chamber CE being airtight, the present dispenser assures a significant improvement over conventional dispensers.

This embodiment also includes a vacuum circuit consisting of a vacuum pump PV connected, through a vacuum chamber CV, to a pipe TV that bifurcates into a first branch TV' that reaches container CS and a second branch TV" that reaches chamber CE. On said first branch TV' there is arranged a non-return valve V, allowing the passage only toward the vacuum circuit, that can be set at the vacuum value required to be maintained in the storage container CS. On the second branch there is arranged an electrovalve EV, while a pressure controller PS to control the vacuum pump PV is located at the bifurcation of pipe TV.

Once coffee is loaded in container CS, vacuum is created in the dispenser by means of pump PV, in order to remove the oxygen and moisture that may deteriorate the coffee. At each coffee output, vacuum is restored in chamber CE and once its preset value is reached shutter G1 between container CS and chamber CE is opened to restore the dose of coffee in the latter.

In this way the air that entered chamber CE does not reach container CS, assuring a perfect storage of the coffee, while at each output vacuum is re-created by the vacuum pump PV only in chamber CE, with the aid of the vacuum chamber CV that accelerates the creation of vacuum in chamber CE as soon as electrovalve EV is opened. It should be noted that having the dispensing chamber CE distinct from the storage container CS that is much larger (usually at least for 1 kg of coffee), prevents the problem of having to re-create the vacuum in the whole dispenser at each coffee output.

It should be taken into account that in the present specification the term "creation of vacuum" is referred to reducing the pressure inside the dispenser to a value lower than atmospheric pressure. This reduction may be more or less strong according to the needs, ranging from 0,01 bar to 0,99 bar, and it is controlled by the pressure controller that controls the activation of pump PV.

In the case of machines that use the coffee quickly, e.g. in a bar, a high vacuum allows a fast rate in restoring the protection of coffee and low costs since vacuum is much slower than moisture in degassing coffee. For this reason the low-boiling flavours will be lost in a negligible amount and therefore it is convenient to make use of high vacuum. On the contrary, if the coffee is used slowly, such as in an office or a private house, a high vacuum would cause an excessive loss of flavours.

The freshly roasted coffee has an average CO₂ content of 19 liters per kg, said gas being the main component of the gas mixture that formed inside the cell during the roasting process, while most of the other gases are low-boiling flavours. This abundant gas may be used to keep the atmosphere inside container CS free from oxygen and moisture.

It should be noted that ground coffee contains less CO₂ with respect to coffee in beans because a large portion of the cells was broken during grinding and lost at that moment the capability of containing gas, therefore the only residual gas is the gas contained in the cells still intact. On the other hand, the interstices between the granules of ground coffee are much smaller than those existing between the beans, thus producing an empty/filled ratio more favourable to coffee. Therefore, in order to keep a ground coffee, even better if pressed, in an inert atmosphere a much smaller volume of CO₂ will be required for the same weight of coffee. The amount of gas remaining in the intact cells is sufficient to carry out exactly the same function as in the coffee in beans exactly because this proportion between available gas and volume of the interstices to be filled remains almost unchanged.

In practice, coffee releases over time the CO₂ contained in the cells and the latter creates a bed inside which coffee is protected, pushing upward the air that remained in the interstices upon loading container CS. Preferably, there is provided a one-way blow-off valve adjusted to prevent the possible excess pressure that might build up inside container CS due to the degassing process of the coffee. It is preferable to arrange said valve in the top portion of container CS, so that the first gas mixture to be expelled will be the residual air from the loading since it floats over the CO₂.

In order to reduce the loss of flavours in case of slow consumption, it is also possible to use an inert gas instead of vacuum or in combination therewith. In practice, it is possible to introduce in container CS some CO₂ or other inert gas coming from a tank connected to the container through a pipe and a valve. Such an inert gas supply system may be manual or automatic through an electrovalve controlled by a pressure controller.

In the models provided with a tank for CO₂ or other inert gas with automatic control, the atmosphere restoring cycle will be activated at each coffee output by the machine, thus assuring the absolute absence of oxygen and moisture. Moreover, instead of said tank it is possible to provide a system for generating CO₂ made up of a chamber in which the coffee machine pump introduces a small amount of water that making contact with bicarbonate and citric acid present in the chamber makes them react and generate a large amount of CO₂. An electrovalve could adjust the amount of water to be introduced in the chamber and a pressure regulator could control the amount and pressure of the CO₂ to be supplied to the container CS.

At each coffee output, in order not to uselessly discharge the CO₂ generated in the container, the valve cuts the flow of CO₂ from the generation chamber or tank to the container, and then restores it after shutter G1 has been closed.

Moreover, a further drawback occurs during the storage of the coffee in the dispenser. Defining "head space" the empty space filled only by gases and not by coffee, namely the sum of all the interstices in the coffee mass plus the dispenser volume not occupied by coffee, it is clear that said head space increases as the coffee is progressively used. When the head space reaches a certain threshold, the coffee changes in flavour even if the atmosphere inside the dispenser is inert, and therefore protective.

This happens because many of the flavours contained in the cells are in the gaseous state at room temperature and therefore tend, due to the osmotic pressure, to balance their concentration inside and outside the cells. This decrease in flavour concentration inside the cells can reach such values that at the time of preparing the drink these flavours result below the taste threshold of a human being, that is to say that they no longer are present. Furthermore, their absence is replaced by other flavours having a higher boiling point that in such a case result excessive and unpleasant upon tasting, whereas they would have remained below the taste threshold where this dilution phenomenon of the lighter flavours had not occurred.

In order to overcome this drawback, the storage container can be made with variable volume. In this way, the "head space" does not increase over time, since at each coffee output the volume of the container is reduced so that the coffee takes up all the available space.

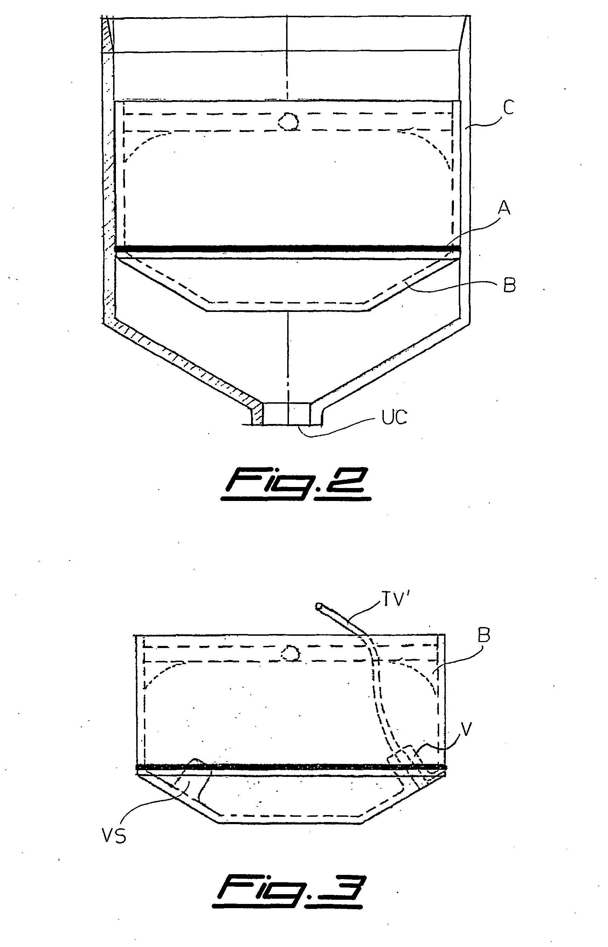

A first possible arrangement is illustrated by the embodiment of fig.2, that shows a storage container C closed at the top by a piston B sliding therein, the airtightness being assured by a suitable gasket A. The movement of piston B can be provided by any mechanic, hydraulic or pneumatic actuator of known type so as to reduce the volume of container C as coffee is dispensed, thus preventing the replacement of the dispensed coffee by air or gases released by the coffee.

A modification of this arrangement is illustrated by the embodiment of fig.3, that shows a piston B connected to the vacuum circuit illustrated in fig.1. In this case, the branch TV' of the circuit rather than entering the side wall of the container is connected to piston B that carries valve V. In practice, when vacuum is created in container C then piston B is automatically pushed downward by the pressure difference between the two sides of the piston, i.e. the vacuum circuit acts as a pneumatic actuator.

It should be noted that valve V is preferably located at the highest point of the roof of piston B for the above-mentioned reason, namely that the first gas mixture to be expelled will be the residual air from loading since it floats above CO₂. Similarly, if a blow-off valve VS is present it will also preferably be located at the highest point of the piston roof for the same reason.

The coffee can remain for days in this state and its possible slow degassing will be compensated for by valve V that opens again and puts the container in connection with the vacuum circuit when the internal pressure trespasses the set threshold. In the case where valve V is replaced by an electrovalve it is possible to deactivate that for longer periods (e.g. during the night), thus determining a further slowing down of the degassing of coffee because during the waiting period the pressure inside the container will increase. The possible excess of pressure with respect to the atmospheric pressure will be discharged through the blow-off valve VS, that also allows an easy descent of piston B after loading container C with the coffee load.

By the same token, it is possible to deactivate the above-mentioned electrovalve when reaching a certain level of consumption of coffee, for example half of the amount contained in the container, so as to further reduce the degassing owed to the ever increasing incidence of the vacuum transferred from the dispensing chamber CE to the container that is reducing in volume.

This problem of the greater decrease in pressure caused by the reduction of volume of the container as the coffee is dispensed can be dealt with also by positioning in dispensing chamber CE one or more resiliently deformable walls (e.g. a balloon) externally connected to the vacuum circuit and to the environment through a three-way electrovalve.

In practice, the balloon is put into communication with the environment at the time of creating vacuum in chamber CE, with shutters G1 and G2 closed, so that the balloon is drawn inside chamber CE thus reducing the volume of chamber CE and therefore the "amount of vacuum" that will be transferred to the storage container. The balloon is then connected to the vacuum circuit upon opening sliding shutter G1, thus returning it to the rest position and allowing the descent of coffee into chamber CE.

Another possible arrangement for reducing the volume of the storage container is using a collapsible flexible container. In other words, if the container is not rigid it is possible to reduce the volume thereof in an automatic way preferably by creating vacuum therein or by applying an overpressure from the outside. In the first case, in particular, at each coffee output the atmospheric pressure will reduce the volume of the container due to the difference in pressure.

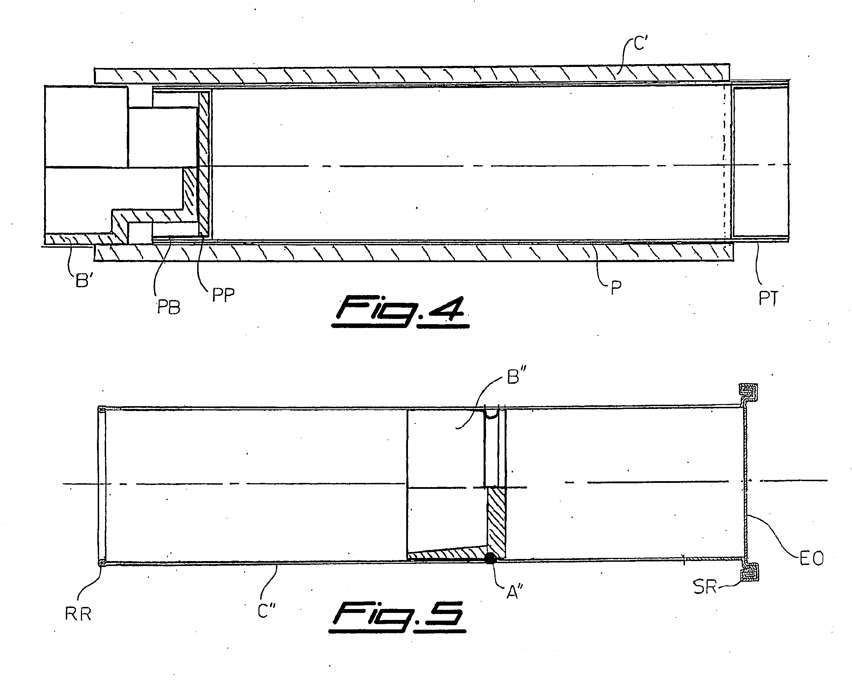

A further embodiment is schematically illustrated in fig.4, that shows a piston B' airtightly sliding inside a container C' in which the coffee is not poured directly into contact with the internal walls of container C'. In fact, the coffee is contained in a secondary flexible container P, typically of multi-laminated material (PET+PE+Al), that has a removable top portion PT and a bottom PB with a rigid disk PP, preferably located outside the volume occupied by the coffee.

In practice, the secondary container P acts also as a transport and sale package for the coffee and can be introduced with a minimum play into container C' since it is obviously sized for such an operation. In this way, it is sufficient to remove the top PT of package P to achieve a condition similar to that of fig.2 yet with the difference that piston B' and container C' are not in direct contact with the coffee.

As a consequence, prior to re-loading the dispenser there is no need to clean the coffee storage container from possible remains, that may go rancid over time, and the tightness between piston and container is improved since piston B' slides over a clean surface.

It should be noted that the portion of piston B' in contact with disk PP has a reduced diameter with respect to the latter in order to obtain a space suitable to receive the flexible material of the secondary container P that gets crushed as piston B' moves forward along container C'. Obviously, when the coffee contained in the secondary container P is finished, the latter will be completely crushed and therefore will be eliminated and replaced by a new secondary container P.

Still another embodiment is schematically illustrated in fig.5, that shows a piston B" airtightly sliding, by means of a suitable gasket A", inside a rigid container C" in which the coffee is put at the factory (e.g. a tin can with walls 0,3 mm thick). Container C" acts also in this case as a transport and sale package for the coffee, and it further includes piston B" that on the surface in direct contact with the coffee is preferably coated with a layer of oxygen barrier material, such as aluminium or the like.

Piston B" is retained inside container C" by a folded over rim RR formed at the bottom end of the latter. At the top end of container C" there is provided an easy-open lid EO (e.g. with a pull tab), as well as a sealing rim SR formed by folding over together the top edge of container C" and lid EO.

In practice, the dispenser container is a removable and replaceable container that is coupled to the dispenser structure through the sealing rim SR designed to engage a corresponding dispenser seat located above shutter G1. Furthermore, since piston B" is integral with the removable container C" it is possible to dispense with the dispenser piston and provide the actuator only. Obviously, it would be possible to drive piston B" also through a suitable dispenser piston such as piston B' of fig.4.

In this embodiment not only there is no need to clean the coffee storage container from possible remains, but the removable container C" can be shaped so as to be coupled exclusively with its relevant dispenser thus creating a so-called "closed system".

Moreover, container C" may include means (not illustrated) for locking piston B" at the end of the travel thereof, namely at the top end of the container, so that piston B" can not be returned to the bottom end and container C" can not be re-used for another load of coffee but has to be replaced.

It should be noted that said concept of the removable and replaceable storage container can be applied also in the case of a collapsible flexible container or of a rigid container without piston.

In this latter case one gives up the volume reduction and uses only the CO₂ released by the coffee and/or a vacuum/inert gas circuit. The advantage of this system is that of dispensing with the container/piston assembly by replacing it with the coffee container, whereas the disadvantage is that the coffee degassing process is accelerated by the repeated action of vacuum over the whole volume of the container, which results in a partial loss of flavours especially in the final phase of use of the coffee load.

This phenomenon will be more evident in the case of a long stay of the coffee in the container whereas it will be almost imperceptible in the case of a fast use of the load. In the case of very fast use (one load a day on average) it is even possible to give up vacuum, since the amount of air transferred from the dispensing chamber CE to the container is minimal given that at the end of the load the air that entered the container will range, depending on the gas contained in the coffee, between 50% and 100% of the container volume, thus bringing to the coffee in the container an amount of oxygen and moisture so small to be considered negligible.

In case vacuum is used, the coffee subjected to a pressure drop will accelerate degassing to restore the pressure balance inside the container. If the coffee is dispensed very fast, the degassing rate could be too slow and allow the pressure drop to reach such a value as to cause the mechanical collapse of the container.

In order to prevent such an occurrence, there is preferably provided a compensation valve connected to the dispensing chamber CE and set at a pressure above said critical value. This valve will let in air or inert gas, to a minimum amount, so as to prevent the collapse of the container structure by restoring the internal pressure of the container to bearable values. This compensation valve can be excluded from the connection with the dispensing chamber, e.g. by an electrovalve upstream therefrom, so as to create in said chamber a high vacuum in the step when the two shutters are closed.

From the description above, it is obvious that it is possible to combine the various characteristics of the different embodiments according to the type of coffee machine to which the dispenser will be applied, namely according to the rate of use of the coffee and to the users' needs. In practice, the present dispenser can have the storage container either removable or fixed, rigid or flexible, with or without volume reduction and blow-off/compensation valve(s) and it can include or not a vacuum circuit and/or a circuit for supplying inert gas.

It is therefore clear that the above-described and illustrated embodiments of the dispenser according to the invention are just examples susceptible of various modifications. In particular, the exact shape, size and arrangement of the elements can be freely changed according to specific manufacturing needs, as long as the capacity of storing the coffee in an atmosphere that prevents the deterioration thereof is retained. Furthermore, it is obvious that, although the description above refers to a coffee dispenser, the present dispenser can be used for storing and dispensing any other product that has deterioration problems similar to those of coffee.

## Claims

1. Dispenser including a storage container (CS; C; C'; C") provided with an outlet nozzle (UC) closed by shutter means (G1), the dispenser including a dispensing chamber (CE) arranged under said storage container (CS; C; C'; C"), connected thereto through said outlet nozzle (UC) and provided at the bottom with a dispensing nozzle (UE) closed by relevant shutter means (G2), **characterized in that** both said storage container (CS; C; C'; C") and said dispensing chamber (CE) are airtightly sealed by sealing means suitable to resist the osmotic pressure caused by the difference in moisture content between the inside of the dispenser and the surrounding environment.

2. Dispenser according to claim 1, **characterized in that** it further includes means suitable to reduce the volume of the container (CS; C; C'; C") as the product stored therein is dispensed.

3. Dispenser according to claim 2, **characterized in that** the means to reduce the volume of the storage container include at least one piston (B; B'; B") airtightly sliding within the container (C; C'; C")..

4. Dispenser according to claim 2, **characterized in that** the means to reduce the volume of the storage container include a flexible and collapsible structure of said container.

5. Dispenser according to claim 3 or 4, **characterized in that** the means to reduce the volume of the storage container include a mechanic, pneumatic or hydraulic actuator.

6. Dispenser according to claim 3 or 4, **characterized in that** the means to reduce the volume of the storage container include a vacuum circuit suitable to achieve inside said container a pressure below atmospheric pressure.

7. Dispenser according to one of the preceding claims, **characterized in that** it further includes a blow-off valve (VS) suitable to limit the pressure buildup inside the container (CS; C; C'; C").

8. Dispenser according to the preceding claim in combination with claim 3, **characterized in that** the blow-off valve (VS) is located in the top portion of the container (CS; C; C'; C") or of the piston (B) sliding therein.

9. Dispenser according to one of the preceding claims, **characterized in that** it further includes a vacuum pump (PV) connected, through a vacuum chamber (CV), to a pipe (TV) that bifurcates into a first branch (TV') that reaches the storage container (CS; C; C'; C") and a second branch (TV") that reaches the dispensing chamber (CE), on said first branch there being arranged a non-return valve (V), allowing the passage only toward the vacuum circuit, that can be set at the vacuum value required to be maintained in the storage container (CS); and on said second branch there being arranged an electrovalve (EV), a pressure controller (PS) suitable to control said vacuum pump (PV) being further located at the bifurcation of said pipe (TV).

10. Dispenser according to one of the preceding claims, **characterized in that** it further includes an inert gas source connected to the storage container (CS; C; C'; C") or to the dispensing chamber (CE).

11. Dispenser according to the preceding claim, **characterized in that** the inert gas source is a tank.

12. Dispenser according to claim 10, **characterized in that** the inert gas source is a system for generating CO₂ made up of a chamber in which a small amount of water is introduced to make contact with bicarbonate and citric acid.

13. Dispenser according to one of claims 10 to 12, **characterized in that** it further includes a valve that at the time of the product output cuts the flow of inert gas from the inert gas source.

14. Dispenser according to one of claims 9 to 13, **characterized in that** it further includes a compensation valve suitable to limit the difference in pressure between the container (CS; C; C'; C") and the environment.

15. Dispenser according to one of claims 9 to 14, **characterized in that** it further includes one or more resiliently deformable walls arranged in the dispensing chamber (CE) and externally connected to the vacuum circuit and to the environment through a three-way electrovalve.

16. Dispenser according to one of claims 9 to 15 in combination with claim 3, **characterized in that** the non-return valve (V) is located in the top portion of the container (CS; C; C'; C") or of the piston (B) sliding therein.

17. Dispenser according to one of the preceding claims, **characterized in that** it further includes means for adjusting the volume of the dispensing chamber (CE).

18. Dispenser according to the preceding claim, **characterized in that** the dispensing chamber (CE) is made as an assembly of two flanges, in which the seats for the shutter means (G1, G2) are formed, screwed onto a central ring nut with double opposite threading.

19. Dispenser according to claim 17, **characterized in that** the means for adjusting the volume of the dispensing chamber (CE) consist of one or more inserts suitable to be introduced in said chamber (CE) so as to reduce the volume of the latter.

20. Dispenser according to the preceding claim, **characterized in that** the inserts are shaped with an external cylindrical surface having a diameter equal to the internal diameter of the chamber (CE) and an internal frustoconical surface.

21. Dispenser according to claim 3 **characterized in that** it further includes a flexible and removable secondary container (P) sized to be introduced with a minimum play into the container (C'), said secondary container (P) being provided with a removable top portion (PT) and with a bottom (PB) having a rigid disk (PP), the piston (B') having a reduced diameter at the portion in contact with the secondary container (P) so as to obtain a space suitable to receive the flexible material of the secondary container (P) that gets crushed as the piston (B') moves forward along the container (C').

22. Dispenser according to the preceding claim, **characterized in that** the rigid disk (PP) is arranged outside the volume occupied by the product.

23. Dispenser according to one of the preceding claims, **characterized in that** the storage container is removable.

24. Dispenser according to the preceding claim in combination with claim 3, **characterized in that** the piston (B") is retained in the removable container (C").

25. Dispenser according to the preceding claim, **characterized in that** the piston (B") is retained in the removable container (C") by a folded over rim (RR) formed at the bottom end of the latter.

26. Dispenser according to one of claims 23 to 25, **characterized in that** at the top end of the container (C") there is provided an easy-open lid (EO) as well as a sealing rim (SR) formed by folding over together the top edge of the container (C") and of said lid (EO).

27. Dispenser according to one of claims 23 to 26, in combination with claim 3 **characterized in that** the piston (B") is coated with an oxygen barrier material on the surface in contact with the product.

28. Dispenser according to one of claims 23 to 27 in combination with claim 3, **characterized in that** the container (C") includes means suitable to lock at its upper end the piston (B") when the latter reaches the end of its travel.

29. Dispenser according to one of the preceding claims, **characterized in that** the shutter means (G1, G2) consist of sliding shutters.

30. Coffee machine **characterized in that** it includes a coffee dispenser according to one of the preceding claims.

## Patentansprüche

1. Entnahmevorrichtung, die einen Lagerbehälter (CS; C; C'; C") aufweist, der mit einem Auslassstutzen (UC) versehen ist, der durch Verschlussmittel (G1) verschlossen ist, wobei die Entnahmevorrichtung ferner eine Entnahmekammer (CE) aufweist, die unter dem Lagerbehälter (CS; C; C'; C") angeordnet ist, der über den Auslassstutzen (UC) damit verbunden ist und am Boden mit einem Entnahmestutzen (UE) versehen ist, der durch jeweilige Verschlussmittel (G2) verschlossen ist, **dadurch gekennzeichnet, dass** sowohl der Lagerbehälter (CS; C; C'; C") als auch die Entnahmekammer (CE) durch Abdichtmittel, die geeignet sind, dem osmotischen Druck, der durch den Unterschied in dem Feuchtigkeitsgehalt zwischen dem Inneren der Entnahmevorrichtung und der Umgebung verursacht wird, zu widerstehen, luftdicht geschlossen sind.

2. Entnahmevorrichtung nach Anspruch 1, **dadurch gekennzeichnet, dass** sie ferner Mittel aufweist, die geeignet sind, das Volumen des Behälters (CS; C; C'; C") zu verringern, wenn das darin gelagerte Erzeugnis entnommen wird.

3. Entnahmevorrichtung nach Anspruch 2, **dadurch gekennzeichnet, dass** die Mittel zum Verringern des Volumens des Lagerbehälters mindestens einen Kolben (B; B'; B") aufweisen, der luftdicht innerhalb des Behälters (C; C'; C") gleitet.

4. Entnahmevorrichtung nach Anspruch 2, **dadurch gekennzeichnet, dass** die Mittel zum Verringern des Volumens des Lagerbehälters eine flexible und zusammenfaltbare Konstruktion des Behälters aufweisen.

5. Entnahmevorrichtung nach Anspruch 3 oder 4, **dadurch gekennzeichnet, dass** die Mittel zum Verringern des Volumens des Lagerbehälters ein mechanisches, pneumatisches oder hydraulisches Stellglied aufweisen.

6. Entnahmevorrichtung nach Anspruch 3 oder 4, **dadurch gekennzeichnet, dass** die Mittel zum Verringern des Volumens des Lagerbehälters einen Vakuumkreislauf aufweisen, der geeignet ist, innerhalb des Behälters einen Druck unterhalb des atmosphärischen Drucks zu erzielen.

7. Entnahmevorrichtung nach einem der vorhergehenden Ansprüche, **dadurch gekennzeichnet, dass** sie ferner ein Abblasventil (VS) aufweist, das geeignet ist, den Druckanstieg innerhalb des Behälters (CS; C; C'; C") zu begrenzen.

8. Entnahmevorrichtung nach dem vorhergehenden Anspruch zusammen mit Anspruch 3, **dadurch gekennzeichnet, dass** das Abblasventil (VS) sich im obersten Abschnitt des Behälters (CS; C; C'; C") oder des darin gleitenden Kolbens (B) befindet.

9. Entnahmevorrichtung nach einem der vorhergehenden Ansprüche, **dadurch gekennzeichnet, dass** sie ferner eine Vakuumpumpe (PV) aufweist, die über eine Vakuumkammer (CV) an eine Leitung (TV) angeschlossen ist, die sich in eine erste Abzweigung (TV'), die zu dem Lagerbehälter (CS; C; C'; C") gelangt, und eine zweite Abzweigung (TV"), die zu der Entnahmekammer (CE) gelangt, verzweigt, wobei an der ersten Abzweigung ein Absperrventil (V) angeordnet ist, das den Durchlass nur zu dem Vakuumkreislauf ermöglicht, das auf den Vakuumwert eingestellt werden kann, der in dem Lagerbehälter (CS) beibehalten werden muss, und an der zweiten Abzweigung ein Elektroventil (EV), ein Druckregler (PS), der geeignet ist, die Vakuumpumpe (PV) zu steuern, die sich ferner an der Gabelung der Leitung (TV) befindet, angeordnet ist.

10. Entnahmevorrichtung nach einem der vorhergehenden Ansprüche, **dadurch gekennzeichnet, dass** sie ferner eine Inertgasquelle aufweist, die mit dem Lagerbehälter (CS; C; C'; C") oder mit der Entnahmekammer (CE) verbunden ist.

11. Entnahmevorrichtung nach dem vorhergehenden Anspruch, **dadurch gekennzeichnet, dass** die Inertgasquelle ein Tank ist.

12. Entnahmevorrichtung nach Anspruch 10, **dadurch gekennzeichnet, dass** die Inertgasquelle ein System zum Erzeugen von CO₂ ist, das aus einer Kammer besteht, in die eine kleine Menge Wasser eingeleitet wird, um Kontakt mit Bicarbonat und Zitronensäure herzustellen.

13. Entnahmevorrichtung nach einem der Ansprüche 10 bis 12, **dadurch gekennzeichnet, dass** sie ferner ein Ventil aufweist, das zum Zeitpunkt der Abgabe des Erzeugnisses den Zufluss von Inertgas von der Inertgasquelle unterbricht.

14. Entnahmevorrichtung nach einem der Ansprüche 9 bis 13, **dadurch gekennzeichnet, dass** sie ferner ein Ausgleichsventil aufweist, das geeignet ist, den Druckunterschied zwischen dem Behälter (CS; C; C'; C") und der Umgebung zu begrenzen.

15. Entnahmevorrichtung nach einem der Ansprüche 9 bis 14, **dadurch gekennzeichnet, dass** sie ferner eine oder mehrere elastisch verformbare Wände aufweist, die in der Entnahmekammer (CE) angeordnet sind und außen mit dem Vakuumkreislauf und mit der Umgebung über ein Dreiwege-Elektroventil verbunden sind.

16. Entnahmevorrichtung nach einem der Ansprüche 9 bis 15 zusammen mit Anspruch 3, **dadurch gekennzeichnet, dass** das Absperrventil (V) sich im obersten Abschnitt des Behälters (CS; C; C'; C") oder des darin gleitenden Kolbens (B) befindet.

17. Entnahmevorrichtung nach einem der vorhergehenden Ansprüche, **dadurch gekennzeichnet, dass** sie ferner Mittel zum Einstellen des Volumens der Entnahmekammer (CE) aufweist.

18. Entnahmevorrichtung nach dem vorhergehenden Anspruch, **dadurch gekennzeichnet, dass** die Entnahmekammer (CE) als eine Einheit von zwei Flanschen hergestellt ist, in denen die Sitze für die Schließmittel (G1, G2) gebildet sind, die auf einen mittleren Gewindering mit doppeltem Gegengewinde geschraubt sind.

19. Entnahmevorrichtung nach Anspruch 17, **dadurch gekennzeichnet, dass** die Mittel zum Einstellen des Volumens der Entnahmekammer (CE) aus einem oder mehreren Einsätzen bestehen, die geeignet sind, in die Kammer (CE) eingesetzt zu werden, um das Volumen der Letzteren zu verringern.

20. Entnahmevorrichtung nach dem vorhergehenden Anspruch, **dadurch gekennzeichnet, dass** die Einsätze mit einer äußeren zylinderförmigen Fläche, die einen Durchmesser aufweist, der gleich dem Innendurchmesser der Kammer (CE) ist, und einer inneren Kegelstumpffläche gebildet sind.

21. Entnahmevorrichtung nach Anspruch 3, **dadurch gekennzeichnet, dass** sie ferner einen flexiblen und herausnehmbaren sekundären Behälter (P) aufweist, der so bemessen ist, dass er mit einem minimalen Zwischenraum in den Behälter (C') eingesetzt werden kann, wobei der sekundäre Behälter (P) mit einem abnehmbaren oberen Abschnitt (PT) und mit einem Boden (PB) versehen ist, der eine starre Platte (PP) aufweist, wobei der Kolben (B') in dem Abschnitt, der sich in Kontakt mit dem sekundären Behälter (P) befindet, einen geringeren Durchmesser aufweist, um einen Platz zu erhalten, der geeignet ist, das flexible Material des sekundären Behälters (P), der zusammengedrückt wird, wenn der Kolben (B') sich entlang des Behälters (C') nach vorne bewegt; aufzunehmen.

22. Entnahmevorrichtung nach dem vorhergehenden Anspruch, **dadurch gekennzeichnet, dass** die starre Platte (PP) außerhalb des von dem Erzeugnis eingenommenen Volumens angeordnet ist.

23. Entnahmevorrichtung nach einem der vorhergehenden Ansprüche, **dadurch gekennzeichnet, dass** der Lagerbehälter herausnehmbar ist.

24. Entnahmevorrichtung nach dem vorhergehenden Anspruch zusammen mit Anspruch 3, **dadurch gekennzeichnet, dass** der Kolben (B") in dem herausnehmbaren Behälter (C") gehalten wird.

25. Entnahmevorrichtung nach dem vorhergehenden Anspruch, **dadurch gekennzeichnet, dass** der Kolben (B") in dem herausnehmbaren Behälter (C") durch einen umgeklappten Rand (RR) gehalten wird, der am unteren Ende des Letzteren ausgebildet ist.

26. Entnahmevorrichtung nach einem der Ansprüche 23 bis 25, **dadurch gekennzeichnet, dass** sich am obersten Ende des Behälters (C") ein einfach zu öffnender Deckel (EO) sowie eine Abdichtkante (SR) befinden, die durch das gemeinsame Umfalten der oberen Kante des Behälters (C") und des Deckels (EO) gebildet ist.

27. Entnahmevorrichtung nach einem der Ansprüche 23 bis 26 zusammen mit Anspruch 3, **dadurch gekennzeichnet, dass** der Kolben (B") auf der Fläche, die sich in Kontakt mit dem Erzeugnis befindet, mit einem Sauerstoffsperrmaterial beschichtet ist.

28. Entnahmevorrichtung nach einem der Ansprüche 23 bis 27 zusammen mit Anspruch 3, **dadurch gekennzeichnet, dass** der Behälter (C") Mittel aufweist, die geeignet sind, an seinem oberen Ende den Kolben (B") festzustellen, wenn Letzterer das Ende seiner Bewegung erreicht.

29. Entnahmevorrichtung nach einem der vorhergehenden Ansprüche, **dadurch gekennzeichnet, dass** die Schließmittel (G1, G2) aus Schiebeklappen bestehen.

30. Kaffeemaschine, **dadurch gekennzeichnet, dass** sie eine Kaffeeentnahmevorrichtung nach einem der vorhergehenden Ansprüche aufweist.

## Revendications

1. Distributeur comportant un récipient de stockage (CS ; C ; C' ; C") pourvu d'une buse de sortie (UC) fermée par des moyens d'obturation (G1), le distributeur comportant en outre une chambre de distribution (CE) agencée sous ledit récipient de stockage (CS ; C ; C' ; C"), raccordé à celui-ci par ladite buse de sortie (UC) et pourvue au fond d'une buse de distribution (UE) fermée par des moyens d'obturation (G2) correspondants, **caractérisé en ce que** ledit récipient de stockage (CS ; C ; C' ; C") et ladite chambre de distribution (CE) sont tous les deux scellés de façon étanche à l'air par des moyens d'étanchéité capables de résister à la pression osmotique provoquée par la différence de teneur en humidité entre l'intérieur du distributeur et l'environnement immédiat.

2. Distributeur selon la revendication 1, **caractérisé en ce qu'**il comporte en outre des moyens adaptés à réduire le volume du récipient (CS ; C ; C' ; C") à mesure que le produit stocké dedans est distribué.

3. Distributeur selon la revendication 2, **caractérisé en ce que** les moyens pour réduire le volume du récipient de stockage comportent au moins un piston (B ; B' ; B") coulissant de manière étanche à l'air à l'intérieur du récipient (C ; C' ; C").

4. Distributeur selon la revendication 2, **caractérisé en ce que** les moyens pour réduire le volume du récipient de stockage comportent une structure flexible et pliable dudit récipient.

5. Distributeur selon la revendication 3 ou 4, **caractérisé en ce que** les moyens pour réduire le volume du récipient de stockage comportent un actionneur mécanique, pneumatique ou hydraulique.

6. Distributeur selon la revendication 3 ou 4, **caractérisé en ce que** les moyens pour réduire le volume du récipient de stockage comportent un circuit de mise sous vide adapté à obtenir à l'intérieur dudit récipient une pression inférieure à la pression atmosphérique.

7. Distributeur selon l'une quelconque des revendications précédentes, **caractérisé en ce qu'**il comporte en outre une soupape de décharge (VS) adaptée à limiter la formation d'une pression à l'intérieur du récipient (CS ; C ; C' ; C").

8. Distributeur selon la revendication précédente en combinaison avec la revendication 3, **caractérisé en ce que** la soupape de décharge (VS) est positionnée dans la partie supérieure du récipient (CS ; C ; C' ; C") ou du piston (B) coulissant dans celle-ci.

9. Distributeur selon l'une quelconque des revendications précédentes, **caractérisé en ce qu'**il comporte en outre une pompe à vide (PV) raccordée, par l'intermédiaire d'une chambre à vide (CV), à un tuyau (TV) qui bifurque en une première branche (TV') qui atteint le récipient de stockage (CS ; C ; C' ; C") et une seconde branche (TV") qui atteint la chambre de distribution (CE), sur ladite première branche sont agencées une soupape de non-retour (V), permettant le passage uniquement en direction du circuit de mise sous vide, qui peut être réglée sur la valeur de vide requise devant être maintenue dans le récipient de stockage (CS) ; et sur ladite seconde branche sont agencés une soupape électrovanne (EV), un dispositif de commande de pression (PS) adapté à commander ladite pompe à vide (PV) positionnée en outre au niveau de la bifurcation dudit tuyau (TV).

10. Distributeur selon l'une quelconque des revendications précédentes, **caractérisé en ce qu'**il comporte en outre une source de gaz inerte raccordée au récipient de stockage (CS ; C ; C' ; C") ou à la chambre de distribution (CE).

11. Distributeur selon l'une quelconque des revendications précédentes, **caractérisé en ce que** la source de gaz inerte est un réservoir.

12. Distributeur selon la revendication 10, **caractérisé en ce que** la source de gaz inerte est un système destiné à générer du CO₂ composé d'une chambre dans laquelle une petite quantité d'eau est introduite pour établir un contact avec du bicarbonate et de l'acide citrique.

13. Distributeur selon l'une quelconque des revendications 10 à 12, **caractérisé en ce qu'**il comporte en outre une soupape qui, au moment où le produit sort, stoppe l'écoulement de gaz inerte provenant de la source de gaz inerte.

14. Distributeur selon l'une quelconque des revendications 9 à 13, **caractérisé en ce qu'**il comporte en outre une soupape de compensation adaptée à limiter la différence de pression entre le récipient (CS ; C ; C' ; C") et l'environnement.

15. Distributeur selon l'une quelconque des revendications 9 à 14, **caractérisé en ce qu'**il comporte en outre une ou plusieurs parois élastiquement déformables agencées dans la chambre de distribution (CE) et raccordées de manière externe au circuit à vide et à l'environnement par une électrovanne à trois voies.

16. Distributeur selon l'une quelconque des revendications 9 à 15 en combinaison avec la revendication 3, **caractérisé en ce que** la soupape de non-retour (V) est positionnée dans la partie supérieure du récipient (CS ; C ; C' ; C") ou du piston (B) coulissant dans celui-ci.

17. Distributeur selon l'une quelconque des revendications précédentes, **caractérisé en ce qu'**il comporte en outre des moyens pour ajuster le volume de la chambre de distribution (CE).

18. Distributeur selon l'une quelconque des revendications précédentes, **caractérisé en ce que** la chambre de distribution (CE) est composée d'un ensemble de deux brides, dans lesquelles sont formés les sièges pour les moyens d'obturation (G1, G2), vissées sur un écrou à oeil central avec un double filetage opposé.

19. Distributeur selon la revendication 17, **caractérisé en ce que** les moyens destinés à régler le volume de la chambre de distribution (CE) sont constitués d'un ou plusieurs inserts adaptés à être introduits dans ladite chambre (CE) de manière à réduire le volume de cette dernière.

20. Distributeur selon l'une quelconque des revendications précédentes, **caractérisé en ce que** les inserts sont formés avec une surface cylindrique externe présentant un diamètre égal au diamètre interne de la chambre (CE) et une surface tronconique interne.

21. Distributeur selon la revendication 3, **caractérisé en ce qu'**il comporte en outre un récipient secondaire flexible et amovible (P) dimensionné pour être introduit avec un minimum de jeu à l'intérieur du récipient (C'), ledit récipient secondaire (P) étant pourvu d'une partie supérieure amovible (PT) et d'un fond (PB) présentant un disque rigide (PP), le piston (B') présentant un diamètre réduit au niveau de la partie en contact avec le récipient secondaire (P) de manière à obtenir un espace adapté à recevoir le matériau flexible du récipient secondaire (P) qui est écrasé à mesure que le piston (B') se déplace vers l'avant le long du récipient (C').

22. Distributeur selon la revendication précédente, **caractérisé en ce que** le disque rigide (PP) est agencé à l'extérieur du volume occupé par le produit.

23. Distributeur selon l'une quelconque des revendications précédentes, **caractérisé en ce que** le récipient de stockage est amovible.

24. Distributeur selon la revendication précédente en combinaison avec la revendication 3, **caractérisé en ce que** le piston (B") est retenu dans le récipient amovible (C").

25. Distributeur selon la revendication précédente, **caractérisé en ce que** le piston (B") est retenu dans le récipient amovible (C") par une bordure rabattue (RR) formée à l'extrémité inférieure de ce dernier.

26. Distributeur selon l'une quelconque des revendications 23 à 25, **caractérisé en ce qu'**à l'extrémité supérieure du récipient (C") est prévu un couvercle d'ouverture facile (EO) ainsi qu'une bordure d'étanchéité (SR) formée en rabattant ensemble le bord supérieur du récipient (C") et dudit couvercle (EO).

27. Distributeur selon l'une quelconque des revendications 23 à 26 en combinaison avec la revendication 3, **caractérisé en ce que** le piston (B") est revêtu d'un matériau formant une barrière à l'oxygène sur la surface en contact avec le produit.

28. Distributeur selon l'une quelconque des revendications 23 à 27 en combinaison avec la revendication 3, **caractérisé en ce que** le récipient (C") comporte des moyens adaptés à verrouiller à son extrémité supérieure le piston (B") lorsque ce dernier atteint la fin de son trajet.

29. Distributeur selon l'une quelconque des revendications précédentes, **caractérisé en ce que** les moyens d'obturation (G1, G2) sont constitués d'obturateurs coulissants.

30. Machine à café **caractérisée en ce qu'**elle comporte un distributeur de café selon l'une quelconque des revendications précédentes.
